(19) **Europäisches Patentamt / European Patent Office / Office européen des brevets**

(11) **EP 1 397 010 B1**

(12) **EUROPEAN PATENT SPECIFICATION**

(45) Date of publication and mention
of the grant of the patent:
**23.09.2009 Bulletin 2009/39**

(21) Application number: **02717940.7**

(22) Date of filing: **27.03.2002**

(51) Int Cl.:
***H04B 7/26*** (2006.01)

(86) International application number:
**PCT/CN2002/000203**

(87) International publication number:
**WO 2002/102096 (19.12.2002 Gazette 2002/51)**

(54) **METHOD FOR USING A CODE WITH A ZERO CORRELATION WINDOW CHARACTERISTIC AS A BASE-STATION-TRANSMITTED SYSTEM SYNCHRONIZATION CODE**

VERFAHREN ZUM VERWENDEN EINES CODES MIT EINER ZERO-CORRELATIONS-FENSTER-CHARAKTERISTIK ALS VON EINER BASIS-STATION-AUSGESTRAHLTEN SYSTEM-SYNCHRONIZATIONS-CODE

PROCEDE D'UTILISATION D'UN CODE AVEC UNE CARACTERISTIQUE DE FENETRE ZERO CORRELATION COMME CODE EMIS PAR UNE STATION DE BASE POUR SYNCHRONISER LE SYSTEME

(84) Designated Contracting States:
**AT BE CH CY DE DK ES FI FR GB GR IE IT LI LU MC NL PT SE TR**

(30) Priority: **11.06.2001 CN 01118758**

(43) Date of publication of application:
**10.03.2004 Bulletin 2004/11**

(73) Proprietor: **Huawei Technologies Co., Ltd.
Guangdong, Shenzhen 518057 (CN)**

(72) Inventor: **ZHOU, Lei,
Huawei service centre bldg.,
Kefa Road
Shenzhen,
Guangdong 518057 (CN)**

(74) Representative: **Mounteney, Simon James et al
Marks & Clerk LLP
90 Long Acre
London
WC2E 9RA (GB)**

(56) References cited:
**WO-A-00/45530          CN-A- 1 264 964
CN-A- 1 297 628          JP-A- 11 340 950**

- **CWTS: "CWTS STD-Tdd-104 V3.3.0 (2000-09); China Wireless Telecommunication Standard (CWTS); Working Group 1 (WG1); Spreading and Modulation"[Online] September 2000 (2000-09), XP002399340 Retrieved from the Internet: URL: http://www.ccsa.org.cn/ITU_spec/ITU-R/ M. 1457/M.1457-2/TDD/V3/TDD-104.doc> [retrieved on 2006-09-18]**
- **DENG XINMIN ET AL: "Spreading sequence sets with zero correlation zone" ELECTRONICS LETTERS, IEE STEVENAGE, GB, vol. 36, no. 11, 25 May 2000 (2000-05-25), pages 993-994, XP006015278 ISSN: 0013-5194**

**Description**

**Field of the Technology**

The invention generally relates to wireless telecommunication technology, specifically to a method of using code with zero correlation window characteristic as base-station-transmitted system synchronization code.

**Background of the Invention**

Synchronization is a key technique in a mobile communication system. Searching with a synchronization code, the maximum correlation peak can be found through a correlation method; then the synchronization of subscriber signal is implemented or the most appropriate base station for the subscriber access is found. At present in a mobile communication system, the selected synchronization codes are a pseudo-random code. As the autocorrelation and cross-correlation value of these pseudo-random codes at the neighborhood where time-delay equals to zero are not equal to zero, so there is mutual interference between these pseudo-random codes.

Code division multiple access (CDMA) is an interference limited technology.
When system synchronization is made with a synchronization code, the synchronization accuracy and veracity will be affected by interference, which includes interference caused by the multipath propagation of the synchronization signal itself and interference caused by the synchronization signals of other subscribers, etc.

For suppressing these interferences, a multi-user detection technique or other adaptive process methods are used at present, but they have high computation complexity and are difficult to realize. Therefore, with the present synchronization codes and without increasing the system complexity, it is difficult to implement a low interference, high accuracy and veracity of synchronization.

**Summary of the Invention**

Objective of the invention is to design a synchronization method for a mobile communication system, so as to increase synchronization accuracy without increasing the system complexity.

For describing the technical scheme of this method, first the following definitions will be introduced.
Definition 1:

Suppose $a$ and $b$ are two binary codes with equal length $N$
$a = [a_0 a_1]$ and $b = [b_0 b_1 ... b_{N-1}]$: wherein $a_i, b_i \in \{-1, 1\}$, $i = 0, 1, ... N\text{-}1$; then

$$r_a(\tau) = \frac{1}{N} \sum_{t=0}^{N-1} a_t a_{(t+\tau)\%N} \quad \cdots\cdots (1)$$

$$r_a^{(l)}(\tau) = \frac{1}{N} \sum_{t=0}^{N-1-\tau} a_t a_{t+\tau} \quad \cdots\cdots (2)$$

wherein T = 0,1...$N$-1; and formulas (1) and (2) are periodic autocorrelation and aperiodic autocorrelation of the code $a$, respectively.

$$r_{ab}(\tau) = \frac{1}{N} \sum_{t=0}^{N-1} a_t b_{(t+\tau)\%N} \quad \cdots\cdots (3)$$

$$r_{ab}^{(l)}(\tau) = \frac{1}{N} \sum_{t=0}^{N-1-\tau} a_t b_{t+\tau} \quad \cdots\cdots (4)$$

wherein T = 0,1...N-1; % is a modulo operator and formulas (3) and (4) are periodic cross-correlation and aperiodic cross-correlation of the codes a and b, respectively.

Definition 2:

Suppose spread spectrum codes $m_1$, $m_2$...$m_p$ with length $N$ simultaneously satisfy:

a. periodic autocorrelation

$$r_{m_i}(\tau) = 0$$

or aperiodic autocorrelation

$$r_{m_i}^{(l)}(\tau) = 0, i = 1,2,\cdots,P, \tau \in [-L,0) \cup (0,L], L \prec N;$$

b. periodic cross-correlation

$$r_{m_i m_j}(\tau) = 0$$

or aperiodic cross-correlation

$$r_{m_i m_j}^{(l)}(\tau) = 0, i, j = 1,2,\cdots,P, i \neq j, \tau \in [-L,L], L \prec N,$$

then binary codes with the zero correlation characteristics are called codes with zero correlation window.

Technical scheme to implement objective of the invention is as following:
A method of using a code with zero correlation window characteristic as base-station-transmitted system synchronization code includes synchronizing a mobile communication synchronization system using a binary code with a zero correlation window characteristics, wherein a width of the zero correlation window is larger than time delay spread of a multi-path signal;

transmitting the code by a cyclic and continuous transmitting mode if a periodic autocorrelation and a periodic cross-correlation of the code have a zero correlation window characteristics; and
transmitting the code by adding a protection time slot if an aperiodic autocorrelation and an aperiodic cross-correlation of the code have a zero correlation window characteristics.

Said code with a zero correlation window characteristics is a binary code whose periodic autocorrelation and periodic cross-correlation have a zero correlation window characteristics, or whose aperiodic autocorrelation and aperiodic cross-correlation exist a zero correlation window characteristics.
The step of continuously transmitting the code is that the selected synchronization code is repeatedly transmitted until a synchronization time slot with 96 chips is filled in.
The step of adding the protection time slot in the transmitted code is that, in said codes including a 32 chips GP time slot and a 64 chips SYNC time slot, the 64 chips SYNC time slot is substituted by a code that zero autocorrelation and zero cross-correlation of the code exist a zero correlation window.
When making synchronization searching, with said synchronization codes synchronization are adjusted according to a correlation method.
In embodiments of the invention, the correlation window width of a synchronization code is determined according to a system requirement, which includes, but is not limited to, the following: the multipath time delay spread of a wireless signal in the mobile communication cell, chip rate in the mobile communication system etc.

In practice, with the codes of the invention, synchronization adjustment accords to the ordinary correlation method.

The effect of the invention is as follows. Since the synchronization code has a better autocorrelation characteristics, the multipath signals caused by multipath propagation of the synchronization code itself does not produce interference; at the same time, since the cross-correlation between different synchronization codes also have zero correlation window, synchronization codes of other subscribers do not bring interference to the subscriber too. Therefore, without using multiple user detection technique or other adaptive process methods, the synchronization codes constructed by the method of the invention can have good correlation detection to implement a more accurate synchronization.

When periodic autocorrelation and periodic cross-correlation of the synchronization code have a zero correlation window, the synchronization codes can be transmitted with a cyclic and continuous transmitting mode. When aperiodic autocorrelation and aperiodic cross-correlation of the synchronization codes have zero correlation characteristics, the synchronization codes can be transmitted with adding a protection time slot mode. Both of these modes can guarantee implementation of the effect mentioned above.

## Brief Description of the Drawings

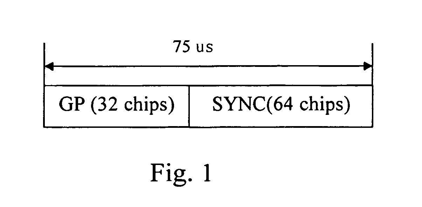

Figure 1 shows a structure diagram of a synchronization code constructed with the method of the invention.

## Embodiments of the Invention

The invention will be described in more detail with reference the figure and embodiment.

Refer to Fig. 1, the length of synchronization code is 75 $\mu$s, the protection time-slot GP is 32 chips and the synchronization time-slot (SYNC) is 64 chips. Since the synchronization code is an aperiodic autocorrelation and aperiodic cross-correlation synchronization code with zero correlation characteristics, so a protection time-slot is added.

In a time division-synchronous CDMA (TD-SCDMA) mobile communication system, according the requirement of "Spreading and modulation" in reference CWTS document TS C104, the SYNC part of Fig. 1 of the present application, Fig.4 of said reference document is substituted with a code that is a aperiodic autocorrelation and aperiodic cross-correlation synchronization code with a zero correlation window, so the mutual interference of the synchronization codes is reduced.

A binary code with periodic autocorrelation and periodic cross-correlation with a zero correlation window characteristics, which is proposed by document, "Spreading sequence sets with zero correlation zone", Deng Xinmin and Fan Pingzhi, Electronics Letters, 2000, 36(11): 993 ~ 994, can also be used as synchronization codes, it is shown as formula (5) in the following:

$$a_1 = (----+-+--+--+++-+--+++--)$$

$$a_2 = (--+--+++++-+++---+---+-+) \quad \cdots\cdots (5)$$

$$a_3 = (+-+---+---++-+-----++-++)$$

$$a_4 = (--+++--+-+++++-++-+-++++)$$

Wherein "-" represents "-1" and "+" represents "+1". When transmitting the synchronization code, a code such as $a_1$ is selected. Since there are 96 chips in Fig. 1 synchronization code structure, so synchronization code $a_1$ must be transmitted repeatedly four times, i.e. $a_1$ $a_1$ $a_1$ $a_1$, to fill the synchronization time slot.

The code in formula (5) has a zero correlation window with three chips width, the periodic autocorrelation and periodic cross-correlation, which is computed by formulas (1) and (3), satisfy:

$$\gamma_{a_i}(\tau) = 0, i = 1,2,3,4, \tau = 1,2,3 \, and \, \gamma_{a_i a_j}(\tau) = 0, i, j = 1,2,3,4, i \neq j, \tau = 0,1,2,3.$$

Suppose taking the arriving time of first path signal as reference for the received multipath signal of a base station, the maximum relative time delay of other paths is $\top_{max}$ and system chip period is $Tc$; then when $\top_{max} < 3Tc$, the codes of the formula (5) can be used as the system synchronization codes, otherwise it is necessary to take a code with a wider zero correlation window as the system synchronization codes.

When energy of multipath signals is relatively small, such as less than -20dB, then affection to the system is smaller too. In this case, said maximum relative time delay of each of path $\top_{max}$ can take the maximum relative time delay of multipath with enough signal energy.

**Claims**

1. A method of using a code with zero correlation window characteristic as a base-station-transmitted system synchronization code, **characterized by**, comprising:

   synchronizing a mobile communication system using a binary code with zero correlation window characteristics, wherein a width of the zero correlation window is larger than time delay spread of a multi-path signal;
   transmitting the code using a cyclic and continuous transmitting mode if a periodic autocorrelation and a periodic cross-correlation of the code have zero correlation window characteristics; and
   transmitting the code by adding a protection time slot if an aperiodic autocorrelation and an aperiodic cross-correlation of the code have zero correlation window characteristics.

2. A method according to Claim 1, wherein the process of synchronizing the mobile communication system using a binary code with the zero correlation window characteristics comprises:

   synchronizing the mobile communication system using a binary code whose periodic autocorrelation and periodic cross-correlation have a zero correlation window characteristics, or using a binary code whose aperiodic autocorrelation and aperiodic cross-correlation have a zero correlation window characteristics

3. A method according to Claim 1, wherein the step of continuously transmitting the code further comprises, repeatedly transmitting the synchronization code until a synchronization time slot with 96 chips.

4. A method according to Claim 1, wherein the step of transmitting the code by adding a protection time slot further comprises, for the code which includes a 32 chips protection time slot and a 64 chips sync time slot, substituting said 64 chips sync time slot by a code whose aperiodic autocorrelation and aperiodic cross-correlation have a zero correlation window.

5. A method according to Claim 1, further comprising, synchronization adjusting according to a correlation method in the synchronization searching procedure.

**Patentansprüche**

1. Verfahren zum Verwenden eines Codes mit Nullkorrelationsfenster-Charakteristik als einen von einer Basisstation übertragenen Systemsynchronisationscode, **dadurch gekennzeichnet, dass** es umfasst:

   Synchronisieren eines Mobilkommunikationssystems unter Verwendung eines Binärcodes mit Nullkorrelationsfenster-Charakteristiken, worin eine Breite des Nullkorrelationsfensters größer ist als die Zeitverzögerungsstreuung eines Mehrwegsignals;
   Übertragen des Codes unter Verwendung eines zyklischen und kontinuierlichen Übertragungsmodus, falls eine periodische Autokorrelation und eine periodische Kreuzkorrelation des Codes Nullkorrelationsfenster-Charakteristiken haben; und
   Übertragen des Codes durch Addieren eines Schutzzeitschlitzes, falls eine aperiodische Autokorrelation und eine aperiodische Kreuzkorrelation des Codes Nullkorrelationsfenster-Charakteristiken haben.

**2.** Verfahren nach Anspruch 1, worin der Prozess des Synchronisierens des Mobilkommunikationssystems unter Verwendung eines Binärcodes mit den Nullkorrelationsfenster-Charakteristiken Folgendes umfasst:

Synchronisieren des Mobilkommunikationssystems unter Verwendung eines Binärcodes, dessen periodische Autokorrelation und periodische Kreuzkorrelation Nullkorrelationsfenster-Charakteristiken haben, oder Verwenden eines Binärcodes, dessen aperiodische Autokorrelation und aperiodische Kreuzkorrelation Nullkorrelationsfenster-Charakteristiken haben.

**3.** Verfahren nach Anspruch 1, worin der Schritt des kontinuierlichen Übertragens des Codes außerdem umfasst, dass der Synchronisationscode bis zu einem Synchronisationszeitschlitz mit 96 Chips wiederholt übertragen wird.

**4.** Verfahren nach Anspruch 1, worin der Schritt des Übertragens des Codes durch Addieren eines Schutzzeitschlitzes außerdem umfasst, dass für den Code, der einen Schutzzeitschlitz von 32 Chips und einen Synchronisationszeitschlitz von 64 Chips enthält, der Synchronisationszeitschlitz von 64 Chips durch einen Code ersetzt wird, dessen aperiodische Autokorrelation und aperiodische Kreuzkorrelation ein Nullkorrelationsfenster haben.

**5.** Verfahren nach Anspruch 1, außerdem Synchronisationsanpassung gemäß einem Korrelationsverfahren im Synchronisationssuchprozess umfassend.

**Revendications**

**1.** Procédé d'utilisation d'un code avec une caractéristique de fenêtre de corrélation nulle en tant que code de synchronisation de système émis par une station de base, **caractérisé en ce qu'**il consiste à :

synchroniser un système de communication mobile en utilisant un code binaire avec des caractéristiques de fenêtre de corrélation nulle, dans lequel une ampleur de la fenêtre de corrélation nulle est supérieure à l'intervalle des retards d'un signal multitrajet ;
émettre le code en utilisant un mode d'émission cyclique et continue si une autocorrélation périodique et une corrélation croisée périodique du code ont des caractéristiques de fenêtre de corrélation nulle ; et
émettre le code en ajoutant une tranche de temps de protection si une autocorrélation apériodique et une corrélation croisée apériodique du code ont des caractéristiques de fenêtre de corrélation nulle.

**2.** Procédé selon la revendication 1, dans lequel le processus de synchronisation du système de communication mobile en utilisant un code binaire avec les caractéristiques de fenêtre de corrélation nulle consiste à :

synchroniser le système de communication mobile en utilisant un code binaire dont l'autocorrélation périodique et la corrélation croisée périodique ont des caractéristiques de fenêtre de corrélation nulle, ou en utilisant un code binaire dont l'autocorrélation apériodique et la corrélation croisée apériodique ont des caractéristiques de fenêtre de corrélation nulle.

**3.** Procédé selon la revendication 1, dans lequel l'étape d'émission continue du code comprend en outre démission de manière répétée du code de synchronisation jusqu'à une tranche de temps de synchronisation avec 96 éléments.

**4.** Procédé selon la revendication 1, dans lequel l'étape d'émission du code en ajoutant une tranche de temps de protection comprend en outre, pour le code qui comprend une tranche de temps de protection de 32 éléments et une tranche de temps de synchronisation de 64 éléments, le remplacement de ladite tranche de temps de synchronisation de 64 éléments par un code dont l'autocorrélation apériodique et la corrélation croisée apériodique ont une fenêtre de corrélation nulle.

**5.** Procédé selon la revendication 1, comprenant en outre l'ajustement de la synchronisation selon un procédé de corrélation dans la procédure de recherche de synchronisation.

75 us

| GP (32 chips) | SYNC(64 chips) |
|---|---|

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Deng Xinmin ; Fan Pingzhi.** Spreading sequence sets with zero correlation zone. *Electronics Letters,* 2000, vol. 36 (11), 993-994